# EUROPEAN PATENT SPECIFICATION

(11) **EP 3 726 711 B1**
(45) Date of publication and mention of the grant of the patent: **22.01.2025**
(21) Application number: 20177917.0
(22) Date of filing: 02.06.2020
(51) Int. Cl.: H02K 1/02, H02K 1/12, H02K 1/2706, H02K 3/04, H02K 21/14

(54) **BRUSHLESS MOTOR-GENERATOR**
BÜRSTENLOSER MOTOR-GENERATOR
MOTEUR-GÉNÉRATOR SANS BALAIS

(30) Priority: 15.04.2019 RU 2019111207; 09.05.2019 US 201916407600; 07.11.2019 EP 19207748
(43) Date of publication of application: 21.10.2020
(73) Proprietor: Medzhlumyan, Ruben, 170 000 Tver (RU)
(72) Inventor: Medzhlumyan, Ruben, 170 000 Tver (RU)
(74) Representative: Zahn, Matthias

(56) References cited:
- WO-A1-2015/027939
- CN-A- 109 617 281
- CN-U- 202 160 025
- US-A- 5 410 232
- US-A1- 2003 215 343
- US-A1- 2009 230 787
- US-A1- 2013 113 307
- US-A1- 2017 012 482
- DEHEZ B ET AL: "Two-degree-of-freedom spherical actuator for Omnimobile ROBOT", PROCEEDINGS / 2002 IEEE INTERNATIONAL CONFERENCE ON ROBOTICS AND AUTOMATION : MAY 11 - 15, 2002, WASHINGTON, D.C, IEEE SERVICE CENTER, PISCATAWAY, NJ, vol. 3, 11 May 2002 (2002-05-11), pages 2381, XP032882507, ISBN: 978-0-7803-7272-6, DOI: 10.1109/ROBOT.2002.1013588
- DATABASE COMPENDEX [online] ENGINEERING INFORMATION, INC., NEW YORK, NY, US; August 2006 (2006-08-01), DEHEZ B ET AL: "Development of a spherical induction motor with two degrees of freedom", Database accession no. E20063310062937
- IEEE TRANSACTIONS ON MAGNETICS AUGUST 2006 INSTITUTE OF ELECTRICAL AND ELECTRONICS ENGINEERS INC. US, vol. 42, no. 8, August 2006 (2006-08-01), pages 2077 - 2089, DOI: 10.1109/TMAG.2006.876473

## Description

### Technical Field

The disclosure generally relates to electrical engineering, in particular, it relates to electromagnetic devices or machines, that convert electrical energy into mechanical energy of rotation due to a magnetic field and vice versa (i.e., electric motors), mechanical energy of rotation into electrical energy (i.e., electric generators).

### Background

RU 2316881 C2 discloses an electric motor with permanent magnets. It comprises a stator, made as multi-pole stator with permanent magnets, as well as a rotor with an open or closed winding, having connection to the collector and brushes. The collector consists of two systems of contacts on a non-conductive base, isolated from each other and nested into each other so that when the rotor turns from one contact to another contact of the collector, the direction of the current in the rotor winding is reversed using two brushes that can touch any pair of collector contacts of two systems mentioned above. The beginning of the rotor winding is connected to one collector contact system, the end of the rotor winding is connected to another collector contact system, and between each pair of contacts of the mentioned systems there is a "spurious" contact that is not connected to the rotor winding to prevent two brushes of different polarity from touching by one brush; and the stator does not require energy.

There is a potential disadvantage of this technical solution in the relatively short life span and in weakened rotation due to the increased wear of the brushes due to their friction.

RU 2510559 C2 discloses a modular electromagnetic device that has a stator and a rotor. Between the surfaces of the stator and the bearing, a multitude of magnets is distributed with alternating orientations in a ring-shaped structure. The stator contains at least one pair of magnetic yokes located symmetrically on both sides of the rotor. Each yoke has a pair of protruding arms, which extend to the magnets and carry a corresponding coil for receiving electrical energy from the electromagnetic device or feeding it into it. Each yoke is individually mounted on its own support, equipped with regulating blocks, which are made with the possibility of adjusting the position of the yoke relative to the opposite magnets. The yoke forms (together with the coils, the support, the regulating blocks, the measuring and control means controlling the yoke) the unit cell of the stator, which can be repeated many times to form single-phase or multi-phase modules.

The complexity of the design, the attraction of the magnets to the cores of the magnetic coils, the difficulty of adjusting the correct regulation of the magnetic yokes, the large mass and overall characteristics are disadvantages of this design.

US 2009/0230787 A1 discloses a motor. The stator that has a frame in the overall shape of a sphere, and the rotor has a rotational axis in multiple degrees of freedom. A plurality of coils in the form of rings is attached to the stator. The stator is made from a plurality of segments. The motor is brushless.

RU 2545525 C1 discloses a brushless motor-generator. It contains a rotating anchor, which is a rotor, located around the stationary stator. A group of permanent toroidal magnets symmetrically distributed on a circle is used as a rotating rotor, the magnetic poles of these magnets are located on their flat end surfaces and form an intermittent unidirectional magnetic flux along this circle. As a stationary stator, a winding is used, made on a circular frame of circular cross section, the axis of symmetry of which coincides with the axis of symmetry of the rotating armature.

It may be disadvantageous that reliability can be low due to the fact that the gluing of toroidal magnets reduces their strength and at certain turns of the armature (rotor) can cause their destruction. In addition, the large diameter of the stator in combination with the small size of the magnets, creates a weak magnetic field of the armature, affecting the strength of the torque.

Trends in recent years show interest in brushless DC motors (generators) to ensure more reliable, efficient and less noisy operation. They are characterized by a smaller mass (or weight) compared to collector engines (i.e., motor-generators using commutators) of the same power. In DC motors with collectors (or commutators), the brushes wear out over time and can cause sparks. Therefore, the collector engine should not be used for work that requires long service life and reliability.

The motor provides a torque, acting between the rotor and the stator. Likewise, the generator receives the torque. However, in both cases, limiting factors are the external dimensions and the overall weight (of the rotor/stator).

In other words, there is a task to create a motor-generator with relatively small external dimensions and relatively low weight (in comparison to existing motor-generators), but with relatively large torque (or other characteristics) in relation to existing motor-generators.

### Summary

As used herein, the term "motor-generator" stands for an electrical machine that can operate either as motor (converting electrical energy into mechanical energy) or as generator (converting mechanical energy into electrical energy). The order of words does not matter, the term "generator-motor" would be a synonym. There is no need that the motor-generator operates in both modes, the motor-generator can be operated as motor only, and can be operated as generator only.

The term "brushless" indicates that commutation is performed outside the motor-generator.

The terms "winding" and "coil" are considered synonyms, with the non-relevant connotation of "winding" being the wire that makes up the coil. In implementations, there are multiple physical coils, but for simplicity, the approach is explained by the singular term "coil".

The goal of this invention is the development of a motor-generator (preferably brushless) with a reduced weight and size of the stator and rotor, while preserving the characteristic force of the torque. (Although the following description frequently refers to torque and thereby focuses on the motor function, the person of skill in the art can apply the discussion of the torque also to term that focus on the generator function, such as the generated electrical current or the like.)

The technical result, that is achieved when using this invention, is due to the design of the stator and rotor, allowing increased reliability of the motor-generator and reducing the weight and dimensions.

This technical result is achieved by the fact that the (brushless) motor-generator, comprising a rotor with a permanent magnet and a stator, wherein the stator, covering the magnet, is made of a shape with rotational symmetry - sphere, ellipsoid, etc. Preferably, the windings are made of a rounded cross section. The stator has a spherical shape. On the outer surface of the stator there are windings in the form of layers isolated from each other, forming from 1 to 12 stator coils with uniformly offset poles relative to each other. The rotor is made in the form of a shaft with a permanent magnet fixed on it, the magnetic field vector of the magnet poles is oriented perpendicular to the axis of rotation of the shaft, while the axis of symmetry of the stator coincides with the axis of rotation of the shaft.

The rotor shaft may have a cylindrical shape, for example, in the form of a rod, and is made of a magnetic material, as well as of a dielectric material. Besides, the rotor shaft and the magnet mount can be made of paramagnetic material such as duralumin and titanium.

The stator can be made of non-magnetic material, and its winding can be made of flat wire in the form of a tape, covered with insulation. The stator can comprise a ferromagnet such as magnetically soft iron or perm alloy.

Performing the rotor in the form of a shaft with a permanent magnet oriented with respect to the shaft so that the magnetic field vector of the magnet poles is perpendicular to the shaft axis with a magnet fixed to it, provides, in addition to reducing the overall dimensions compared to the prototype, the placement of a permanent magnet inside the magnetic fields of the coil, which is necessary for their more effective interaction with the entire magnetic field of the permanent magnet, which increases the interaction force and, accordingly, provides greater reliability through smoother rotation of the rotor.

Placing the permanent magnet inside the spherical stator, on the outer surface of which spherical coils with uniformly displaced poles are wound, which means that the poles of the permanent magnet will be located directly inside the coil, also affects the reduction in weight and size characteristics with the same power and torque technical result. With the claimed construction of the motor-generator, the permanent magnet is under the influence of a larger magnetic field, thus providing a smoother rotation of the rotor, which is evident at high revolutions.

Such a set of advantages distinguishes the solution from the known analogues, and also distinguishes it from the other approaches, having a permanent magnet directly inside the stator coils.

The location on the outer surface of the stator winding in the form of isolated from each other layers, forming from 1 to 12 stator coils with uniformly shifted poles relative to each other, allows to create a uniform effect of the magnetic fields of the coils on the permanent magnet, ensuring uniform rotation of the rotor. The number of coils is selected based on the overall dimensions of the generator motor: for a small generator motor the number of coils is minimal, while the permanent magnet is in the magnetic field generated by the coil without losing the technical result. The minimum number of coils is one. At the same time, an increase in the number of coils above 12 is impractical, since this will increase the weight and size characteristics of the device without significantly increasing the torque force. Such a set of advantages distinguishes the solution from known analogs, and also differs from the well-known approach, having a permanent magnet directly inside the stator coils.

Looking at geometric bodies, a sphere has maximal surface with minimal dimension in space (i.e., volume). In view of the above-mentioned task, this effect is used.

The magnetic field of a solenoid (i.e., the magnetic field by a coil being a helix) concentrates inside the solenoid. Therefore, the sphere coil (i.e., "spherical coil") concentrates the magnetic field inside the sphere. In other words, the sphere coil can be considered as a form-transformed solenoid. In other words, the sphere coil is a modified solenoid coil, that is not wound around a cylinder (as with the solenoid) but appears as wound around a ball.

Taking the analogy of an optical lens, the spherical coil at the stator concentrates the magnetic field similar as a magnifying glass focuses the light.

In view of the maximum surface, the inner surface of the sphere coil is maximized for the given external dimension. Also, the spherical stator has an external surface with maximal area as well.

In view of the above-mentioned task, the electric motor (or generator) is relatively powerful: the torque is relatively high and the size (external dimension) and weight are relatively small.

It is known that the shape of a sphere has a maximum surface area with a minimum volume in space. It is also known that the magnetic field of the solenoid is concentrated inside the solenoid. Accordingly, a spherical electromagnetic coil (i.e., as if wound around a ball) behaves like a modified solenoid that concentrates the (entire) magnetic field inside itself. In this case, the internal area of the spherical coil is maximal for a given volume, while the external surface of a spherical magnetic stator has a maximum area, and therefore the interaction of the magnetic fields of the stator and rotor has a maximum area for this volume. It is noted that that stator with its coil (or coils) appears more monolithic (one piece), and that the sphere is broken only in two parts: the openings for the shaft of the rotor.

Optionally, the stator is implemented from non-magnetic material (diamagnet). This can be advantageous because the lack of saturation induction allows to apply larger currents in the stator coil (in comparison to implementation that lead to saturation induction).

In other words, the stator is optimized according to the principle of maximizing magnetic field (in relation to the surface). The same principle can be applied to the rotor as well. The permanent magnet of the rotor can have spherical shape as well. The outer dimension of the rotor can fit to the inner dimension of the stator such that the distance between rotor and stator is minimized.

Because both the rotor and the stator are implemented by spheres, the magnetic field between the stator and the rotor is located in the maximal surface area. Thereby the magnetic interaction (between the magnetic field of the stator and of the rotor) is optimized to be high, wherein at the same time the overall volume (external dimension of the stator / rotor) is minimized. Having both the rotor (i.e. the permanent magnet of the rotor) and the stator implemented by spheres has the further advantage of having substantially equal rotor-stator distance at substantially all parts of the rotor/stator. Equal distance can be advantageous in view of substantially equal magnetic flow between the rotor and the stator.

Optionally, the bearings of the rotor are made of ceramic material, in which there is no heating of the bearing by Foucault currents (or eddy currents).

In traditional designs, the stator obtains mechanical stability by being implemented with metals. Convenient metals are so-called soft-magnetic materials (i.e., materials that are easy to magnetize or demagnetize, such as for example iron). However, metals add weight. In contrast the spherical shape of the rotor allows a different approach: The spherical coils (of the stator) can be impregnated and filled with composite material. In other words, the coils are made from metal wire (conducting, to obtain the electrical field) and the wires are glued together by non-metal material (or hold together otherwise, to obtain insulation and mechanical stability). Such an implementation approaches a "coil-only" stator in that the mechanical stability of the stator (e.g., the provide the torque) avoid metal parts in the stator housing.

Optionally, the coils (of the stator) are implemented by stranded wire.

Optionally, a magnetic screen is attached outside the stator coils. The magnetic screen has a wall thickness (in the closed interval between 1 to 20 mm, or [1 mm, 20 mm]). The screen has a same shape of the stator: it is a sphere as well. As the name suggests, the magnetic screen keeps the magnetic field inside the stator (i.e., focusing effect).

Optionally, the magnetic screen (or shielding) is made of soft magnetic material (i.e., material with low coercivity), such as pure iron. The screen material can be attached to the (outer surface of the) stator during manufacturing by deposition. (Looking from inside: shaft, rotor, stator coil, shielding).

Optionally, the stator comprises a housing in the form of two hemispheres that are located outside the stator coils. Both hemispheres can compress the stator, and both hemispheres can be attached to each other by fastenings in the form of bolts or studs. The housing has the function of a mount housing, by that the stator is mounted.

However, hawing the housing implemented in the same form as the stator coil (i.e., sphere) is not necessary. The housing can be implemented as a sphere (e.g., with two hemispheres as described), or can be implemented by a similar form such as by a cube or by a dodecahedron. It is noted that the side areas (or face areas) of the cube / dodecahedron are convenient to mount the stator.

### Brief Description of the Drawings

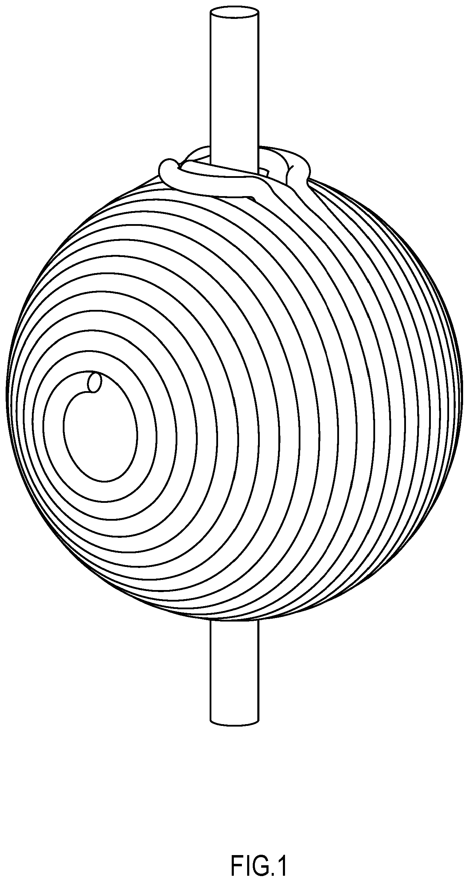

FIG. 1 shows a schematic general view of a brushless motor-generator with a permanent magnet located inside the stator coil;

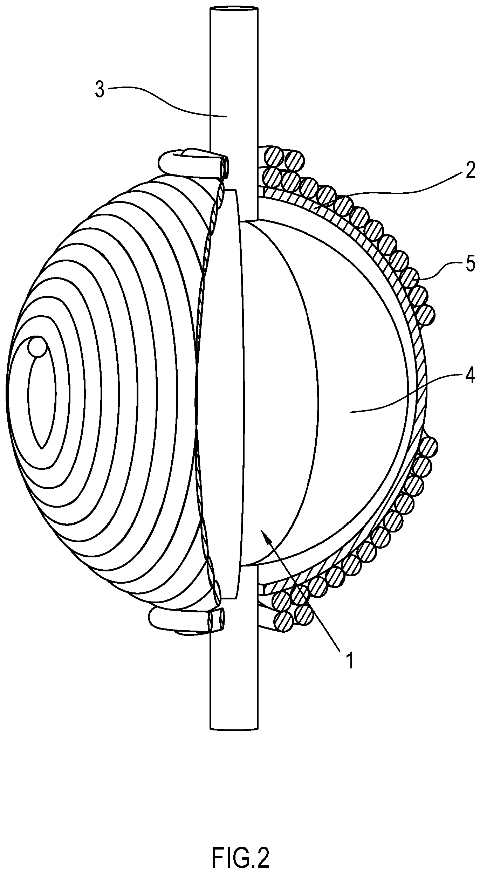

FIG. 2 shows the device with one coil in section;

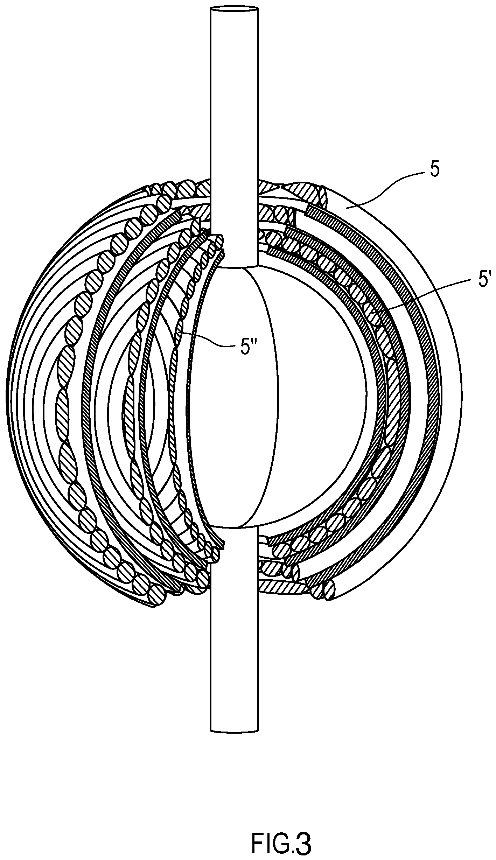

FIG. 3 shows the device with several coils in section. In principle, the motor-generator can operate with a single coil, however introduction of more coils, up to 12 makes its operation smoother and more efficient;
FIG. 4 illustrates the motor-generator in view from above, with the axis of rotation in the center, and with rotor 1 (inside) and stator 2 (outside) simplified to circles;
FIG. 5 illustrates a motor-generator with 3 stator coils;
FIG. 6 illustrates the motor-generator in a side view, but with more details regarding the rotor magnet; and
FIG. 7 illustrates a further view to a 3-coil motor-generator, with more details.

### Detailed Description

The motor-generator (preferably brushless) comprises a rotor 1 and a stator 2. The rotor 1 is made in the form of a shaft 3, on which a permanent magnet 4 is rigidly fixed. The rotor 1 is mounted for rotation inside the stator 2, so that the axis of rotation of the shaft 3 coincides with the axis of symmetry of the stator 2. At the same time, the magnetic field vector of the poles of the magnet 4 is perpendicular to the axis of rotation of the shaft 3. The stator 2 is stationary and has a rotational axis, and is spherical. The winding 5 is made on the outer surface of the stator 2. The winding 5 forms the coils of the stator 2. It is possible to position at least one coil of the stator 2 up to twelve coils. These numbers of coils are optimal; however, a larger number of coils is possible. The windings 5 are wound in layers, independently of each other, and are located along the surface of a spherical stator 2 with uniformly offset poles relative to each other. For example, in the case of two windings, two electromagnetic coils are formed, which have four poles. With so many coils should be placed on the surface of the stator 2 with the poles shifted relative to each other by 90° (i.e. 90 degrees shifted poles), and when performing three isolated windings, the poles are shifted by 60°. In another embodiment, the poles are shifted by 30° with 24 layers of coils in the device. The stator 2 covers the magnet 4 so that it is completely located inside the stationary stator 2 and is inside the coils and the magnetic field of the coils. The shaft 3 is made of a cylindrical shape, such as a rod, pin, etc., and can be made of a non-magnetic or magnetic material. The stator 2 is made of a dielectric or composite magnetic material. The winding 5 of the stator 2 is made of insulated wire of circular cross section or insulated flat wire in the form of a tape.

The (brushless) motor-generator operates as follows. The stator 2 and the rotor 1 are fastened in accordance with the planned application, using bearings (not shown in the Figures), and the shaft 3 of the rotor 1 is placed in the inner ring of the bearing, while the stator 2 is placed on the outer ring of the bearing. When voltage is applied to the winding 5, it is powered, and the stator coil 2 is transformed into an electromagnet having two poles. The rotation of the rotor 1 is due to the interaction of the opposite poles of the magnetic fields between the permanent magnet 4 and the resulting electromagnet (coil under voltage). When the rotor 1 rotates and approaches the pole of the next coil, the voltage is applied to it, the next coil is also powered and becomes an electromagnet. Further process repeats for all coils. After that, the first coil is energized with reverse polarity. The process repeats, and the rotor 1 continues to rotate. Due to the fact that a permanent magnet 4 is located inside the stator 2, there is a strong magnetic interaction between the permanent magnet 4 and the resulting electromagnet, the poles of which are evenly displaced relative to each other along the surface of the stator 2, thereby achieving torque stability without jerking at any rotor speed that ensures the reliability of the device with its small weight and size parameters. The magnetic field of an electromagnet more effectively interacts with a permanent magnet, ensuring smooth rotor rotation with interacting magnetic fields, which is important at any rotor speed.

In the case of mechanical rotation of the shaft 3 from the outside, for example, by a windmill, by water flow, by car wheels, by rolling or by any other device and method, this motor goes into generator mode and provides electrical power that can be accumulated or consumed by external sources.

The examples can be expanded within the scope of the claims, for example, a permanent magnet can be rigidly mounted on the rotor shaft, as well as be made monolithically with the shaft.

Brushless motors are much smaller than collector motors of the same power (there are no commutators inside the motor-generator), but the new approach with the spherical shape (stator, rotor) provides for a further size reduction. The new approach has shown its effectiveness in achieving a technical result in its practical realization. At the same time, overall dimensions and weight of the motor-generator are smaller compared with the known brushless generators, with the overall simplicity of performance and ease of operation and use in order to achieve the goal.

The motor-generator can be used in aircraft and or other vehicles in that relatively small external dimensions and relatively low weight are desired.

The technical solution can be used in aviation and automotive industry, drives of various devices and mechanisms for industrial and domestic purposes. It can also be used as a motor-generator in cars, electric bicycles, electric motorcycles, quadcopters, helicopters, jet skis, industrial and household appliances.

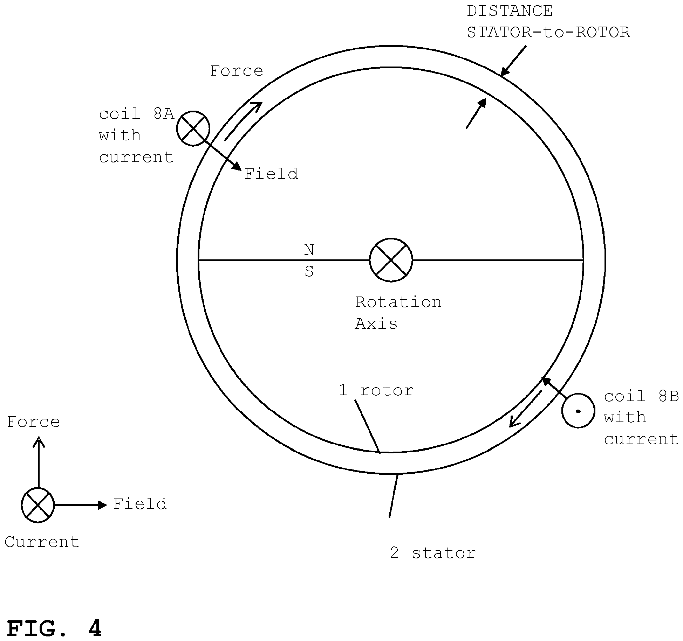

FIG. 4 illustrates the motor-generator in view from above, with the axis of rotation in the center, and with rotor 1 (inside) and stator 2 (outside) simplified to circles. As the rotor 1 uses a permanent magnet, the poles N ("north") and S ("south") are symbolized.

The legend in the lower left corner illustrates a coordinate system with a wire with current, the resulting magnetic field and the resulting force, well-known by the term "right-hand rule". The arrows for the magnetic field and for the resulting mechanical forces are illustrated differently. The person of skill in the art understands that the directions (by arrows) for current, magnetic field gradient and resulting forces are merely symbolic. Directions can be defined differently without departing from the scope of the illustration.

This (right-hand) rule is now applied to coil with references 8AB. For convenience, the coil is illustrated only by small fractions in cross-sectional view by a short piece. Reference 8A illustrates the coil with current flow in one direction, and reference 8B illustrates the same coil with the current flow in the other direction. (As explained above, the coils is wound around the stator, so that the drawing just illustrates the same coil in two fractions.)

Assuming current flowing through the coil, the magnetic field would interact with the magnetic field of the rotor to create a force in the direction of rotation (i.e., the torque). The magnetic filed is a gradient, and for simplicity this gradient is only illustrated with a single arrow standing for the one exemplary field line. For references 8A and 8B, this arrow points to the rotational axis.

However, the resulting force depending on the magnetic field of the magnet (or the rotor) as well, for references 8A and 8B the coil faces different poles (N and S), hence the resulting forces are directed opposite. Since the rotor is a single piece, both forces add to each other, thus creating rotation. The field lines of the magnetic field (of magnet 4) is not illustrated for simplicity, they are text-book known. It is however noted that with the spherical shape of the stator/rotor arrangement, the field lines (from the stator, and from the rotor) have similar form not depending on the location.

Of course, the simplified drawing shows the generation of force only for particular parts of the rotor/stator. As the distance between rotor and stator is substantially equal, the force would be substantially equal at every location. This contributes to the above-mentioned smoother rotation.

It is noted that this explanation focuses on the motor-generator in the motor function, but reversing the principle would not change the fields. The rotation of the rotor would simply create a current in the coil (with different directions if shows by references (8A and 8B).

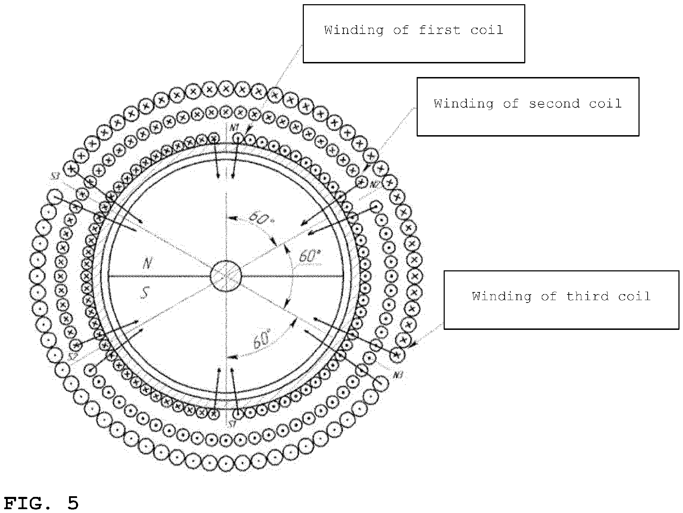

FIG. 5 illustrates a motor-generator with 3 stator coils. FIG. 5 takes over the notation of the coils (and the current directions) and applies the notation to motor-generator that has 3 coils, with windings for the first, second and third coils. The first coil is located close to the rotor, and the third coil is located at the outside. As indicated by symbols N and S, the first coil creates a magnetic field with N1 and S1, with the magnetic field lines directed to the permanent magnet (with N and S likewise). The second coil creates a magnetic field N2 and S2, but shifted (60°) to the field of the first coil. The principle is applied to the third coil as well, again shifted (60°). The angle is calculated as 180° over the number of coils. The arrows show the magnetic field created by the coils, mainly directed to the center of the magnet.

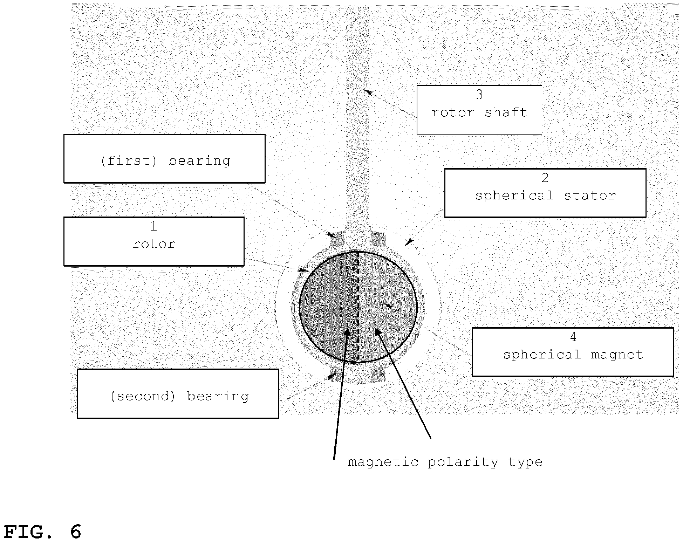

FIG. 6 illustrates the motor-generator in a side view, but with more details regarding the rotor magnet 4 (that is spherical). The rotor shaft 3 is illustrated as the center (axis of rotation). The spherical stator 3 and the spherical magnet 4 (of the rotor 1) are illustrated in cross-section view. There are two bearings, a first bearing illustrated at the top (first, where the shaft is extended) and below (second).

The horizontal dashed line illustrates the transition between magnetic field polarity types (i.e., conventionally called N and S). As illustrated in FIG. 4, the resulting force would be oriented "into" the drawing and would cause rotation (e.g., for the motor function).

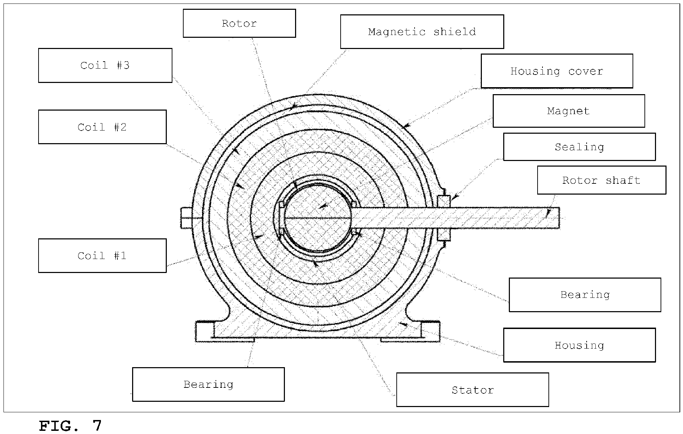

FIG. 7 illustrates a further view to a 3-coil motor-generator, with more details. The magnetic shield is noted.

## Claims

1. A motor-generator, comprising a rotor (1) with a permanent magnet (4) located on a cylindrical shaft (3) and with a stator (2), wherein the stator (2) has rotational symmetry, the stator (2) covering the magnet (4);
the winding on the outer surface of the stator being a winding in a form of insulated layers, forming at least one coil;
a magnetic field vector of the magnet poles of the permanent magnet (4) being oriented perpendicular to an axis of rotation of the shaft (3), while an axis of symmetry of the stator (2) coincides with the axis of rotation of the shaft (3),
the motor-generator **characterized in** the stator (2) being a spherical stator with the at least one coil (5) being a spherical coil wound around the stator (2) that surrounds the rotor, wherein the spherical coil is a modified solenoid coil that appears as wound around a ball;
the rotor (1) having the permanent magnet (4) being a sphere as well so that the outer dimension of the rotor can fit to the inner dimension of the stator such that the distance between rotor and stator is minimized; and
the rotor (1) being supported at the stator (2) with two bearings, wherein the shaft (3) of the rotor (1) is placed on the inner ring of the bearings, and the stator (2) is placed on the outer ring of the bearings.

2. The motor-generator being a brushless motor-generator.

3. The motor-generator according to any of claims 1 to 2, wherein the shaft (3) is made of a magnetic material.

4. The motor-generator according to any of the preceding claims, wherein the stator (3) is made of a dielectric non-magnetic material.

5. The motor-generator according to any of the preceding claims, wherein a magnetic screen is attached outside the stator coils.

6. The motor-generator according to claim 5, wherein the magnetic screen has a wall thickness between 1 to 20 mm.

7. The motor-generator according to claim 6, wherein the magnetic screen is made of a soft magnetic material.

8. The motor-generator according to claim 7, wherein the material of the magnetic screen is pure iron.

9. The motor-generator according to claim 8, wherein the material of the magnetic screen has been deposited during manufacturing.

10. The motor-generator according to any of the previous claims, wherein the stator comprises a mount housing in the form of two hemispheres that are located outside the stator coils.

11. The motor-generator according to claim 10, wherein both hemispheres compress the stator, and wherein both hemispheres are attached to each other by fastenings in the form of bolts or studs.

12. The motor-generator according to any of the preceding claims, wherein the stator is made of a composite magnetic material.

13. The motor-generator according to any of the preceding claims, wherein the winding of the stator is a winding in a form of insulated layers, forming from 2 up to 24 stator coils with evenly shifted poles relative to each other, wherein the stator coils create a magnetic field that interacts with the magnetic field of the rotor magnet.

14. The motor-generator according to claim 13, wherein the stator coils are arranged selected from the following: having two stator coils with 90 degrees shifted poles,
having three stator coils with 60 degrees shifted poles, and having a plurality of coils with 30 degrees shifted poles.

15. The motor-generator according to any of the preceding claims, wherein the winding of the stator being made with a rounded cross section, or being made of flat wires.

## Revendications

1. Moteur-générateur, comprenant un rotor (1) avec un aimant permanent (4) localisé sur un arbre cylindrique (3) et avec un stator (2), dans lequel le stator (2) a une symétrie de rotation, le stator (2) couvrant l'aimant (4) ;
l'enroulement sur la surface externe du stator étant un enroulement sous une forme de couches isolées, formant au moins une bobine ;
un vecteur de champ magnétique des pôles d'aimant de l'aimant permanent (4) étant orienté perpendiculaire à un axe de rotation de l'arbre (3), alors qu'un axe de symétrie du stator (2) coïncide avec l'axe de rotation de l'arbre (3),
le moteur-générateur **caractérisé en ce que**
le stator (2) est un stator sphérique avec l'au moins une bobine (5) étant une bobine sphérique enroulée autour du stator (2) qui entoure le rotor, dans lequel la bobine sphérique est une bobine de solénoïde modifiée qui apparaît comme étant enroulée autour d'une bille ;
le rotor (1) a l'aimant permanent (4) étant une sphère également de sorte que la dimension externe du rotor peut s'ajuster à la dimension interne du stator de telle sorte que la distance entre le rotor et le stator est minimisée ;
et
le rotor (1) est supporté au niveau du stator (2) avec deux paliers, dans lequel l'arbre (3) du rotor (1) est placé sur la bague interne des paliers, et le stator (2) est placé sur la bague externe des paliers.

2. Moteur-générateur étant un moteur-générateur sans balais.

3. Moteur-générateur selon l'une quelconque des revendications 1 à 2, dans lequel l'arbre (3) est fabriqué dans un matériau magnétique.

4. Moteur-générateur selon l'une quelconque des revendications précédentes, dans lequel le stator (3) est fabriqué dans un matériau non-magnétique diélectrique.

5. Moteur-générateur selon l'une quelconque des revendications précédentes, dans lequel un écran magnétique est fixé à l'extérieur des bobines de stator.

6. Moteur-générateur selon la revendication 5, dans lequel l'écran magnétique a une épaisseur de paroi comprise de 1 à 20 mm.

7. Moteur-générateur selon la revendication 6, dans lequel l'écran magnétique est fabriqué dans un matériau magnétique doux.

8. Moteur-générateur selon la revendication 7, dans lequel le matériau de l'écran magnétique est du fer pur.

9. Moteur-générateur selon la revendication 8, dans lequel le matériau de l'écran magnétique a été déposé pendant la fabrication.

10. Moteur-générateur selon l'une quelconque des revendications précédentes, dans lequel le stator comprend un logement de montage sous la forme de deux hémisphères qui sont localisés à l'extérieur des bobines de stator.

11. Moteur-générateur selon la revendication 10, dans lequel l'un et l'autre des hémisphères compriment le stator, et dans lequel l'un et l'autre des hémisphères sont fixés l'un à l'autre par des fixations sous la forme de boulons ou de goujons.

12. Moteur-générateur selon l'une quelconque des revendications précédentes, dans lequel le stator est fabriqué dans un matériau magnétique composite.

13. Moteur-générateur selon l'une quelconque des revendications précédentes, dans lequel l'enroulement du stator est un enroulement sous une forme de couches isolées, formant de 2 à 24 bobines de stator avec des pôles uniformément décalés les uns par rapport aux autres, dans lequel les bobines de stator créent un champ magnétique qui interagit avec le champ magnétique de l'aimant de rotor.

14. Moteur-générateur selon la revendication 13, dans lequel les bobines de stator sont agencées selon les manières suivantes : ayant deux bobines de stator avec des pôles décalés de 90 degrés, ayant trois bobines de stator avec des pôles décalés de 60 degrés, et ayant une pluralité de bobines avec des pôles décalés de 30 degrés.

15. Moteur-générateur selon l'une quelconque des revendications précédentes, dans lequel l'enroulement du stator est fabriqué avec une section transversale arrondie, ou est fabriqué en fils plats.

## Patentansprüche

1. Motorgenerator, umfassend einen Rotor (1) mit einem Permanentmagneten (4), der sich auf einer zylindrischen Welle (3) befindet, und mit einem Stator (2), wobei der Stator (2) eine Rotationssymmetrie aufweist, der Stator (2) den Magneten (4) bedeckt;
die Wicklung auf der Außenoberfläche des Stators eine Wicklung in Form isolierter Schichten ist, die mindestens eine Spule ausbilden;
ein Magnetfeldvektor der Magnetpole des Permanentmagneten (4) senkrecht zu einer Rotationsachse der Welle (3) ausgerichtet ist, während eine Symmetrieachse des Stators (2) mit der Rotationsachse der Welle (3) zusammenfällt,
der Motorgenerator **dadurch gekennzeichnet ist, dass**
der Stator (2) ein kugelförmiger Stator ist, wobei die mindestens eine Spule I (5) eine kugelförmige Spule ist, die um den Stator (2) herum gewickelt ist, der den Rotor umgibt, wobei die kugelförmige Spule eine modifizierte Solenoidspule ist, die aussieht, als wäre sie um einen Ball gewickelt;
der Rotor (1), der den Permanentmagneten (4) aufweist, ebenfalls eine Kugel ist, so dass die Außenabmessung des Rotors an die Innenabmessung des Stators derart angepasst werden kann, dass der Abstand zwischen Rotor und Stator minimiert wird;
und
der Rotor (1) mit zwei Lagern an dem Stator (2) gestützt ist, wobei die Welle (3) des Rotors (1) auf dem Innenring der Lager platziert ist und der Stator (2) auf dem Außenring der Lager platziert ist.

2. Motorgenerator, der ein bürstenloser Motorgenerator ist.

3. Motorgenerator nach einem der Ansprüche 1 bis 2, wobei die Welle (3) aus einem magnetischen Material besteht.

4. Motorgenerator nach einem der vorstehenden Ansprüche, wobei der Stator (3) aus einem dielektrischen, nicht-magnetischen Material besteht.

5. Motorgenerator nach einem der vorstehenden Ansprüche, wobei außerhalb der Statorspulen eine magnetische Abschirmung angebracht ist.

6. Motorgenerator nach Anspruch 5, wobei die magnetische Abschirmung eine Wandstärke zwischen 1 und 20 mm aufweist.

7. Motorgenerator nach Anspruch 6, wobei die magnetische Abschirmung aus einem weichmagnetischen Material besteht.

8. Motorgenerator nach Anspruch 7, wobei das Material der magnetischen Abschirmung reines Eisen ist.

9. Motorgenerator nach Anspruch 8, wobei das Material der magnetischen Abschirmung während des Herstellens aufgetragen wurde.

10. Motorgenerator nach einem der vorstehenden Ansprüche, wobei der Stator ein Montagegehäuse in Form von zwei Halbkugeln umfasst, die sich außerhalb der Statorspulen befinden.

11. Motorgenerator nach Anspruch 10, wobei beide Halbkugeln den Stator zusammendrücken und wobei beide Halbkugeln durch Befestigungen in Form von Bolzen oder Stiftschrauben aneinander angebracht sind.

12. Motorgenerator nach einem der vorstehenden Ansprüche, wobei der Stator aus einem magnetischen Verbundmaterial besteht.

13. Motorgenerator nach einem der vorstehenden Ansprüche, wobei die Wicklung des Stators eine Wicklung in Form isolierter Schichten ist, die 2 bis zu 24 Statorspulen mit gleichmäßig verschobenen Polen relativ zueinander ausbilden, wobei die Statorspulen ein Magnetfeld erzeugen, das mit dem Magnetfeld des Rotormagneten interagiert.

14. Motorgenerator nach Anspruch 13, wobei die Statorspulen angeordnet sind, ausgewählt aus den Folgenden: zwei Statorspulen mit um 90 Grad verschobenen Polen aufweisend, drei Statorspulen mit um 60 Grad verschobenen Polen aufweisend und eine Vielzahl von Spulen mit um 30 Grad verschobenen Polen aufweisend.

15. Motorgenerator nach einem der vorstehenden Ansprüche, wobei die Wicklung des Stators aus einem abgerundeten Querschnitt besteht oder aus Flachdrähten besteht.
